# EUROPEAN PATENT APPLICATION

(11) **EP 2 397 898 A1**
(43) Date of publication of application: **21.12.2011**
(21) Application number: 10741046.6
(22) Date of filing: 03.02.2010
(51) Int. Cl.: G03B 17/56, G03B 15/00, H04N 5/225

(54) **MONITORING CAMERA AND METHOD FOR ATTACHING MONITORING CAMERA**

(30) Priority: 10.02.2009 JP 2009028137
(71) Applicant: Panasonic Corporation, Kadoma-shi Osaka 571-8501 (JP)
(72) Inventor: UCHIDA, Tamotsu, Osaka-shi, Osaka 540-6207 (JP); YAMAUCHI, Ryuji, Osaka-shi, Osaka 540-6207 (JP); TAMURA, Kazushige, Osaka-shi, Osaka 540-6207 (JP)
(74) Representative: Unland, Jochen Hermann
(86) International application number: PCT/JP2010/000626
(87) International publication number: WO 2010/092766

(57) **Abstract**

A monitoring camera (1) includes: a base member (2) fixed to a camera installing surface; an attaching member (3) fixed to the base member (2); and a camera body (4) fixed to the attaching member (3). A storing space (13) for storing a cable (10) connected to the camera body (4) is provided on an outer peripheral portion of the base member (2), and a cover member (5) for covering the storing space (13) is attached to an outside of the storing space (13). The cover member (5) can be slid between a cover position where the cable (10) stored in the storing space (13) is covered and an exposure position where the cable (10) stored in the storing space (13) is exposed. As a result, provided is a monitoring camera having improved workability at the time of installation and maintenance thereof.

## Description

### Technical Field

The present invention relates to a monitoring camera having improved workability at the time of installation and maintenance thereof.

### Background Art

Conventionally, as a monitoring camera used for a security alarm system etc., there has been known a monitoring camera comprised of an attaching base attached to a camera installing surface, such as a wall and a ceiling, and a camera body attached to the attaching base (for example, refer to Patent Literature 1).

When such monitoring camera is installed, the attaching base is first attached to the camera installing surface, and then cables are connected to the camera body. Subsequently, the cables connected to the camera body are stored in a space inside the attaching base, and the camera body is attached to the attaching base.

However, as for the conventional monitoring camera, when the cables are connected at the time of installation of the monitoring camera, it is necessary to do so with the camera body held with one hand, resulting in low workability at the time of installation of the monitoring camera. In addition, when the work to attach the camera body to the attaching base is performed, the connected cables interfere with the work, making it difficult to perform. In addition, as for the conventional monitoring camera, it is necessary to remove the camera body from the attaching base when performing maintenance work, and after completion of the maintenance, it is necessary to store the cables in the space inside the attaching base again, and to perform the work to attach the camera body to the attaching base, thus resulting in low workability at the time of maintenance of the monitoring camera.

Such monitoring camera is often installed at a high place. Hence, particularly when installing the monitoring camera at the high place, it is very undesirable for a worker that the worker is forced to work with one hand. In addition, as for a monitoring camera installed outdoors, it is necessary to provide waterproofing (such as to wrap a waterproof tape) when connecting a cable, and thus it is very difficult to perform the work with one hand. Further, such monitoring camera often requires regular maintenance. Hence, low workability at the time of maintenance places a large burden on the worker. Therefore, development of a monitoring camera with high workability of installation work and maintenance work has been strongly desired by workers of the installation work and the maintenance work of the monitoring camera.

### Citation List

### Patent Literature

Patent Literature 1: Japanese Patent Laid-Open No. 7-162723

### Summary of Invention

### Technical Problem

The present invention is made under the above-described background. An object of the present invention is to provide a monitoring camera having improved workability at the time of installation and maintenance thereof.

### Solution to Problem

A first aspect of the present invention is a monitoring camera, and this monitoring camera includes: a base member fixed to a camera installing surface; an attaching member fixed to the base member; and a camera body fixed to the attaching member, and a storing space for storing a cable connected to the camera body is provided on an outer peripheral portion of the base member, a cover member for covering the storing space is attached to an outside of the storing space, and the cover member can be moved between a cover position where the cable stored in the storing space is covered and an exposure position where the cable stored in the storing space is exposed.

Another aspect of the present invention is a method for attaching a monitoring camera, and this method for attaching the monitoring camera includes: fixing a base member to a camera installing surface; fixing an attaching member to the base member; fixing a camera body to the attaching member; connecting a cable to the camera body; storing the cable connected to the camera body in a storing space provided on an outer peripheral portion of the base member; and attaching a cover member to an outside of the storing space to cover the cable stored in the storing space with the cover member.

As described hereinafter, there are other aspects in the present invention. Hence, disclosure of the present invention is intended to provide some aspects of the present invention, and it is not intended to limit the scope of the invention described and claimed herein.

### Brief Description of Drawings

[Figure 1] Figure 1 is an exploded perspective view for illustrating a configuration of a monitoring camera in the embodiment.
[Figure 2] Figure 2 is a perspective view showing fixing of a base member to a camera installing surface (not shown).
[Figure 3] Figure 3 is a cross-sectional view showing fixing of the base member to the camera installing surface.
[Figure 4] Figure 4 is a perspective view showing fixing of an attaching member to the base member.
[Figure 5] Figure 5 is a cross-sectional view showing the fixing of the attaching member to the base member.
[Figure 6] Figure 6 is a perspective view showing attachment of a camera body to the attaching member.
[Figure 7] Figure 7 is a side view showing the fixing of the camera body to the attaching member.
[Figure 8] Figure 8 is a perspective view showing the fixing of the camera body to the attaching member.
[Figure 9] Figure 9 is a perspective view showing connection of a cable.
[Figure 10] Figure 10 is a perspective view showing the monitoring camera in a state where the cable has been connected thereto.
[Figure 11] Figure 11 is a cross-sectional view showing the monitoring camera in the state where the cable has been connected thereto.
[Figure 12] Figure 12 is a perspective view showing attachment of a cover.
[Figure 13] Figure 13 is a perspective view showing the monitoring camera in a state where the cover has been attached thereto.
[Figure 14] Figure 14 is a cross-sectional view showing the monitoring camera in the state where the cover has been attached thereto.
[Figure 15] Figure 15 is a perspective view showing attachment of a cover of a modified example.
[Figure 16] Figure 16 is a cross-sectional view showing the monitoring camera in a state where the cover of the modified example has been attached thereto.

### Description of Embodiments

A detail of the present invention will be described hereinafter. However, the following detailed description and appended drawings do not limit the invention. Instead, the scope of the invention is defined by the appended claims.

A monitoring camera of the present invention includes: a base member fixed to a camera installing surface; an attaching member fixed to the base member; and a camera body fixed to the attaching member, and the monitoring camera has a configuration in which a storing space for storing a cable connected to the camera body is provided on an outer peripheral portion of the base member, a cover member for covering the storing space is attached to an outside of the storing space, and the cover member can be moved between a cover position where the cable stored in the storing space is covered and an exposure position where the cable stored in the storing space is exposed.

According to this configuration, at the time of installation work of the monitoring camera, first, the base member is fixed to the camera installing surface, the attaching member is fixed to the base member, and then the camera body is fixed to the attaching member. Subsequently, the cable is connected to the camera body in a state where the camera body is fixed, and the cable is stored in the storing space of the base member. As described above, since the connection work and the storage work of the cable can be performed in a state where both hands can be used freely, workability at the time of installation of the monitoring camera is improved compared with a case where only one hand can be used. Subsequently, lastly, the cover member is attached to the base member, and then the cover member is moved to the cover position. As described above, the cable can be protected from outside by covering the cable with the cover member. Meanwhile, at the time of maintenance work of the monitoring camera, the cable is exposed only by moving the cover member to the exposure position, and thus the maintenance work can be performed easily. As a result, workability at the time of maintenance of the monitoring camera is improved.

In addition, in the monitoring camera of the present invention, the base member may have a configuration including a guide hooking portion for hooking the cable stored in the storing space.

According to this configuration, when performing the work to store the cable in the storing space of the base member, the cable is hooked to the guide hooking portion of the base member. The cable hooked to the guide hooking portion is held so as not to extend out of the storing space. As a result, when performing the installation work of the monitoring camera, the cable is prevented from interfering with the work. Hence, workability at the time of installation of the monitoring camera is further improved.

In addition, in the monitoring camera of the present invention, the cover member may have a configuration including an engaging latch portion that engages with the base member or the camera body when the cover member is moved to the exposure position.

According to this configuration, when the cover member is moved to the exposure position at the time of the maintenance work of the monitoring camera, the engaging latch portion of the cover member engages with the base member or the camera body. In a manner described above, since the cover member is prevented from coming away during the work, the maintenance work can be performed in the state where both hands can be used freely. Hence, workability at the time of maintenance of the monitoring camera is further improved.

A method for attaching a monitoring camera of the present invention includes: fixing a base member to a camera installing surface; fixing an attaching member to the base member; fixing a camera body to the attaching member; connecting a cable to the camera body; storing the cable connected to the camera body in a storing space provided on an outer peripheral portion of the base member; and attaching a cover member to an outside of the storing space to cover the cable stored in the storing space with the cover member.

According to this method, at the time of installation work of the monitoring camera, first, the base member is fixed to the camera installing surface, the attaching member is fixed to the base member, and then the camera body is fixed to the attaching member. Subsequently, the cable is connected to the camera body in a state where the camera body is fixed, and the cable is stored in the storing space of the base member. As described above, since the connection work and the storage work of the cable can be performed in a state where both hands can be used freely, workability at the time of installation of the monitoring camera is improved compared with a case where only one hand can be used. Subsequently, lastly, the cover member is attached to the base member, and then the cover member is moved to the cover position. As described above, the cable can be protected from outside by covering the cable with the cover member.

According to the present invention, the storing space of the cable is provided on the outer peripheral portion of the base member, and the cover member movable between the cover position and the exposure position is provided outside the storing space, whereby workability at the time of installation and maintenance of the monitoring camera is improved.

Hereinafter, a monitoring camera of an embodiment of the present invention will be described using drawings. In the embodiment, a case will be exemplified where a monitoring camera is used for a monitoring system of facilities and buildings, etc.

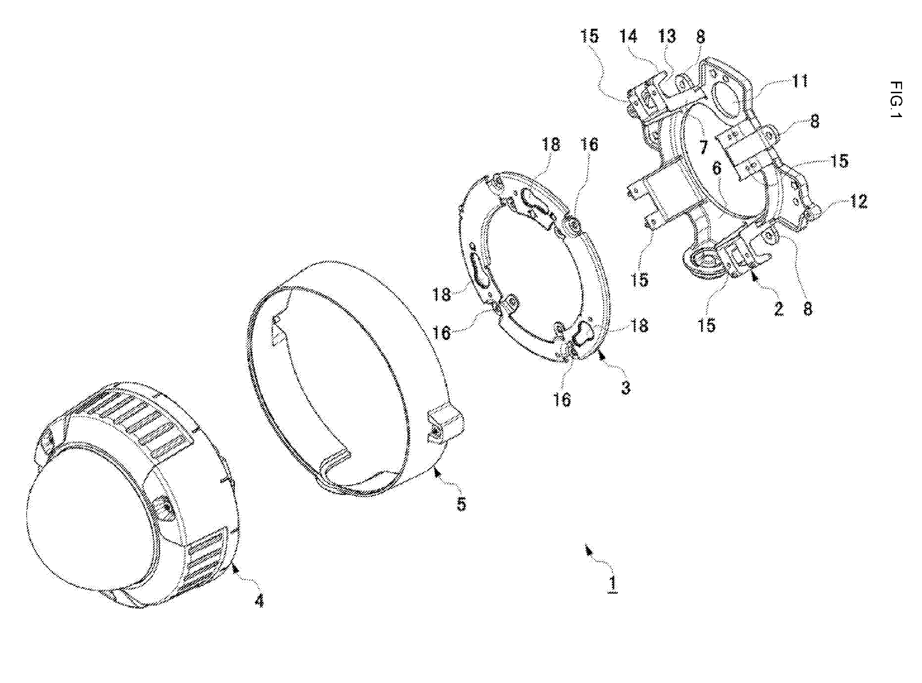

First, a configuration of the monitoring camera of the embodiment will be described with reference to the drawings. Figure 1 is an exploded perspective view of the monitoring camera. As shown in Figure 1, a monitoring camera 1 includes: a metal base member 2 fixed to a camera installing surface (not shown in Figure 1), such as a wall and a ceiling; a metal attaching member 3 fixed to this base member 2; and a camera body 4 fixed to this attaching member 3. In addition, a cover member 5 is attached to the base member 2.

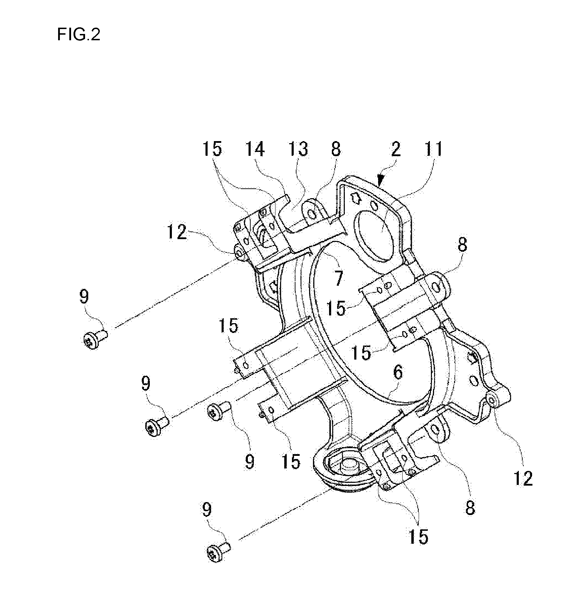

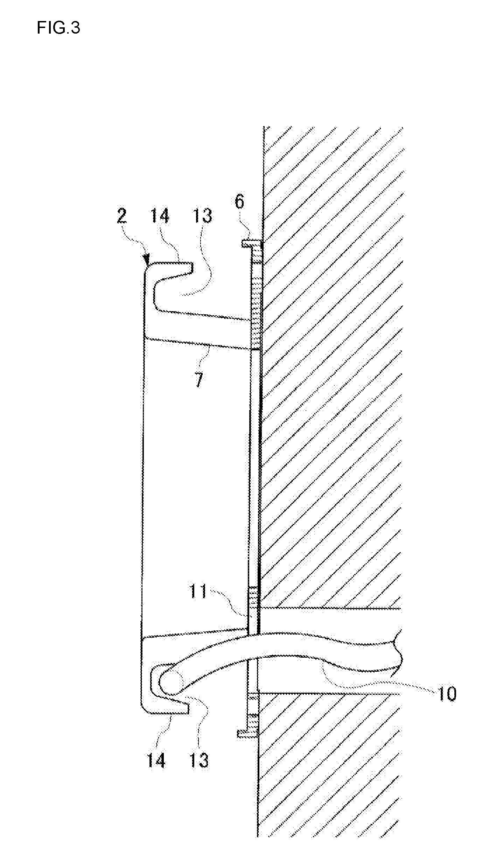

The base member 2 includes a plate-shaped base portion 6 and projecting portions 7 provided projecting from the base portion 6. Four screw insertion holes 8 are provided at the base portion 6, and fixing screws 9 are passed through these screw insertion holes 8, and then the base member 2 is screwed to the camera installing surface (refer to Figure 2). In addition, a cable insertion hole 11 through which a cable 10 connected to the camera body 4 is inserted is provided at this base portion 6 (refer to Figures 2 and 3). Further, two screw holes 12 for attaching the cover member 5 are provided at the base portion 6.

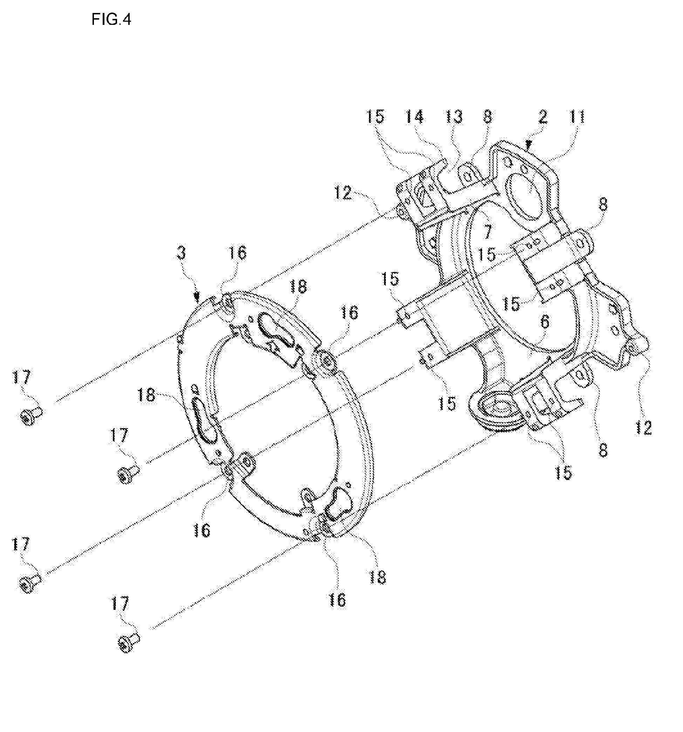

A peripheral portion of the projecting portion 7 of the base member 2 is provided as a storing space 13 for storing the cable 10. Additionally, a tip of the projecting portion 7 is bent into a hook, where a guide hooking portion 14 for hooking the cable 10 stored in the storing space 13 is formed (refer to Figure 3). In addition, screw holes 15 for screwing the attaching member 3 are formed on an end surface of the projecting portion 7 (refer to Figure 4).

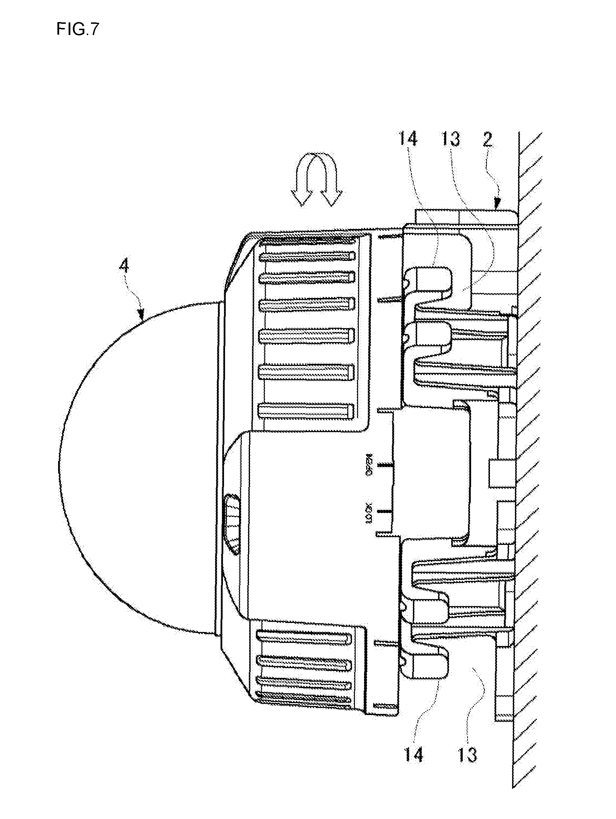

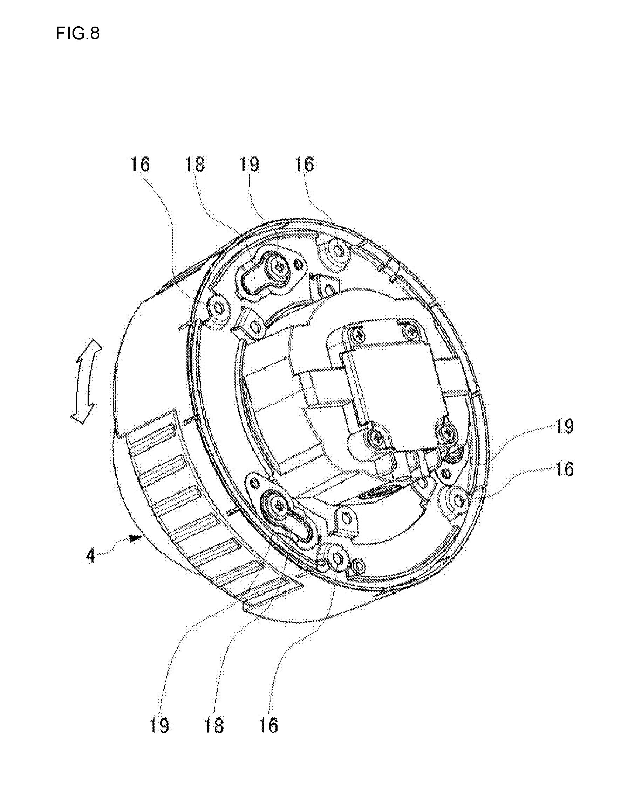

Four screw insertion holes 16 are provided at the attaching member 3, and fixing screws 17 are passed through these screw insertion holes 16, and then the attaching member 3 is screwed to the base member 2 (refer to Figure 4). In addition, three attaching holes 18 for attaching the camera body 4 are formed on this attaching member 3. This attaching hole 18 is comprised of a large diameter portion and a small diameter portion. A size of the large diameter portion is set to be larger than a diameter of a head of an attaching screw 19 of a back surface of the camera body 4, and a size of the small diameter portion is set to be smaller than the diameter of the head of the attaching screw 19. Namely, the monitoring camera of the embodiment is configured such that when the camera body 4 is rotated to locate the attaching screw 19 at the small diameter portion after the attaching screw 19 is inserted in the large diameter portion of the attaching hole 18, the attaching screw 19 cannot be pulled out from the attaching hole 18 (refer to Figures 7 and 8).

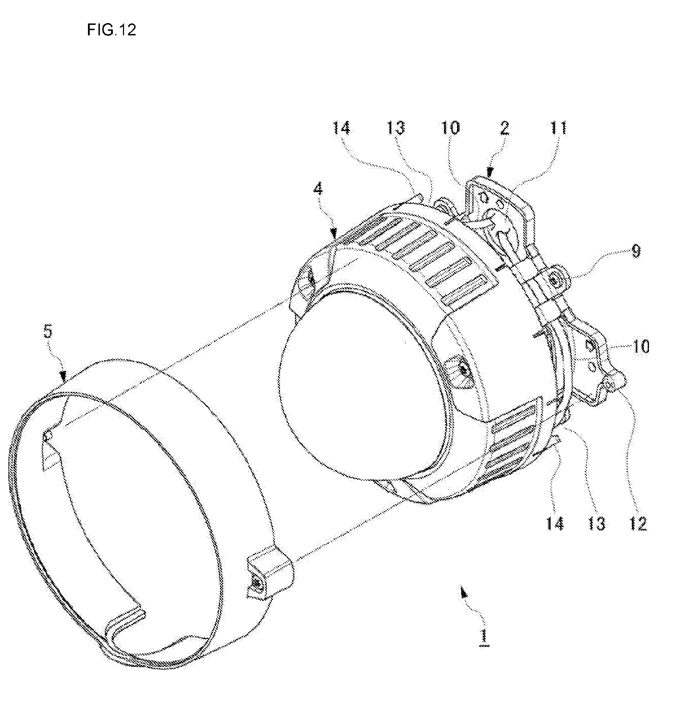

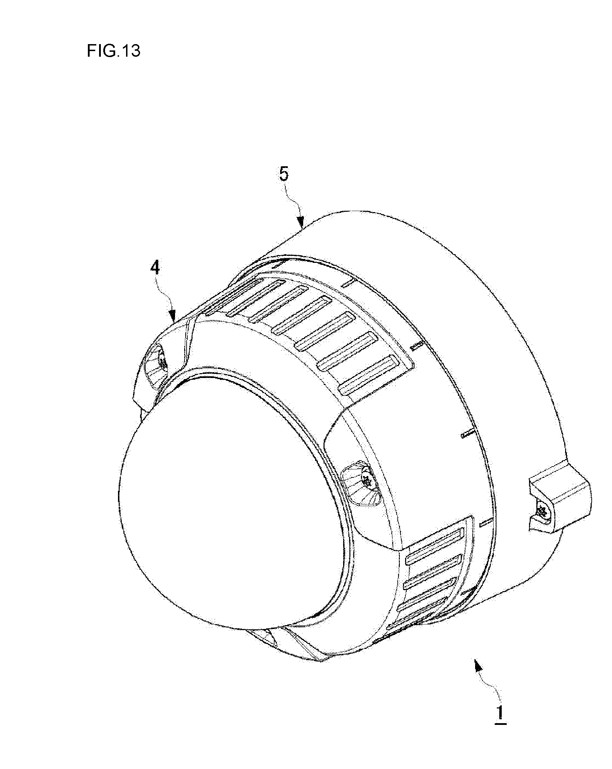

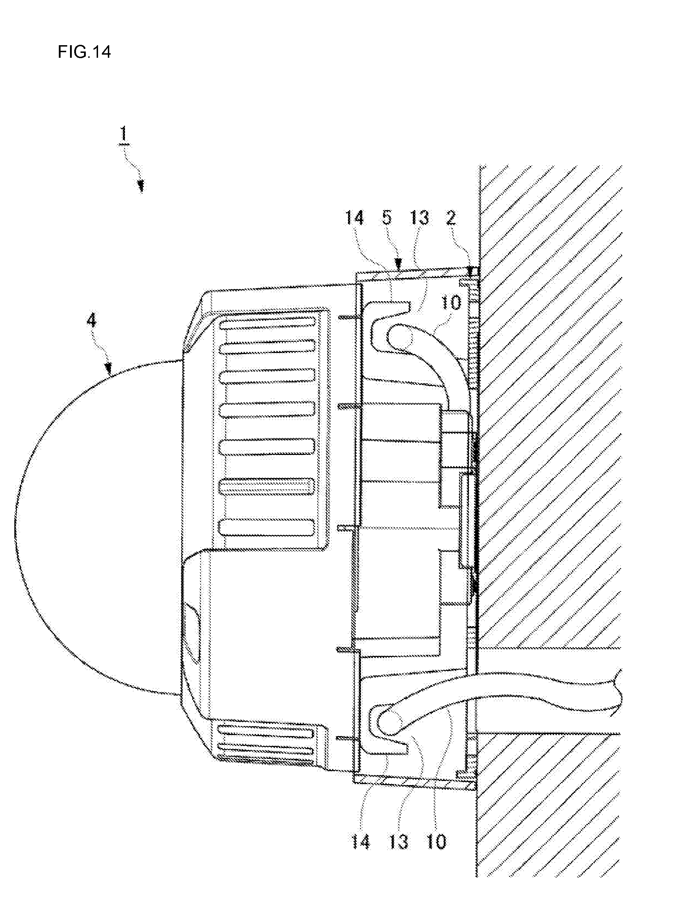

The cover member 5 is fitted in an outside of the storing space 13, and is screwed to the screw hole 12 of the base portion 6 of the base member 2 (refer to Figure 12). The cover member 5 attached to the base member 2 as described above is configured so as to cover the storing space 13 (refer to Figures 13 and 14). When this cover member 5 is slid, it moves between a cover position (refer to Figures 13 and 14) where the cable 10 stored in the storing space 13 is covered and an exposure position (refer to Figure 12) where the cable 10 stored in the storing space 13 is exposed. Namely, it can also be said that the cover member 5 can slide between the cover position and the exposure position.

A procedure when installing the monitoring camera 1 configured as described above will be described with reference to the drawings.

When installing the monitoring camera 1 of the present embodiment, first, the base member 2 is fixed to a camera installing surface, such as a wall and a ceiling. In this case, the screw 9 is passed through the screw insertion hole 8 of the base portion 6 of the base member 2 to then screw the base member 2 to the camera installing surface (refer to Figures 2 and 3). At this time, the cable 10 extending from a camera installing surface side is inserted through the cable insertion hole 11 of the base portion 6 of the base member 2, and is hooked to the guide hooking portion 14 of the projecting portion 7 of the base member 2, and is stored in the storing space 13 of the base member 2 (refer to Figure 3).

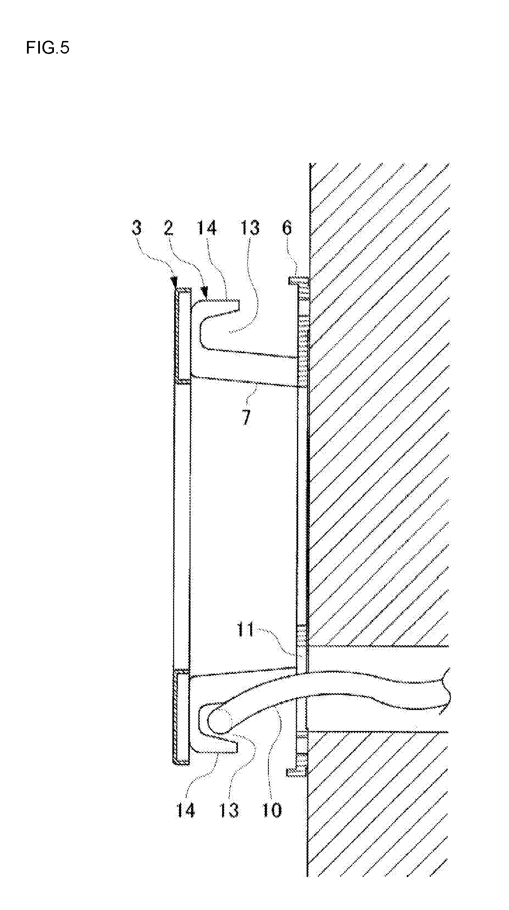

Next, the attaching member 3 is fixed to the base member 2. In this case, the screw 17 is passed through the screw insertion hole 16 of the attaching member 3 to then screw the attaching member 3 to the screw hole 15 of the end surface of the base member 2 (refer to Figures 4 and 5) .

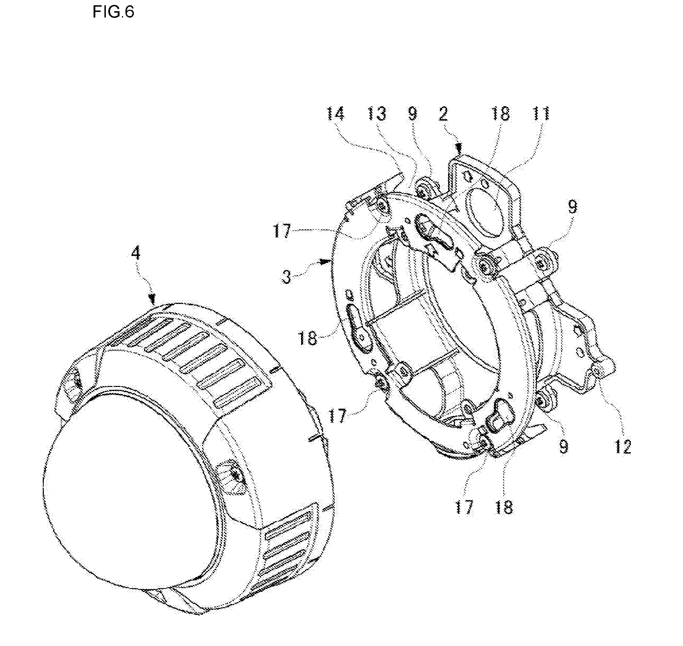

Subsequently, the camera body 4 is fixed to the attaching member 3. In this case, first, the attaching screw 19 of the back surface of the camera body 4 is inserted in the large diameter portion of the attaching hole 18 of the attaching member 3, and then, the camera body 4 is rotated to locate the attaching screw 19 at the small diameter portion (refer to Figures 6 to 8). In a manner described above, the camera body 4 is fixed to the attaching member 3.

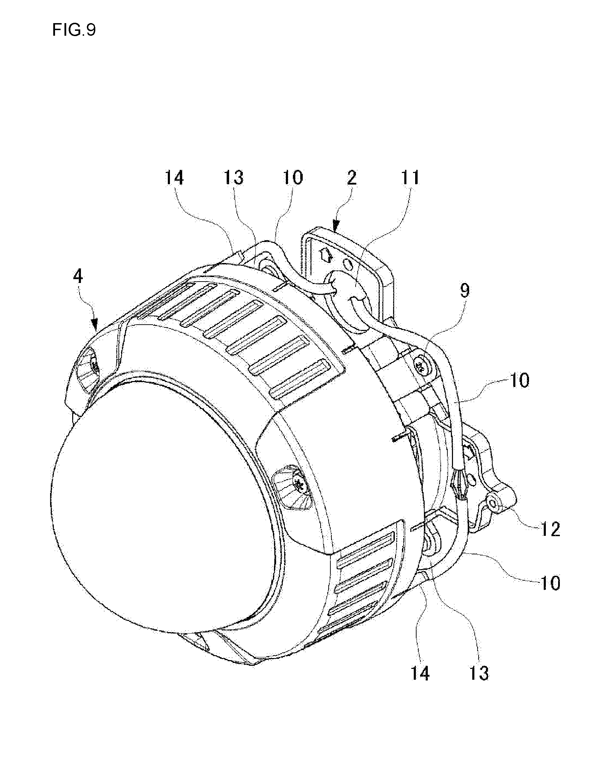

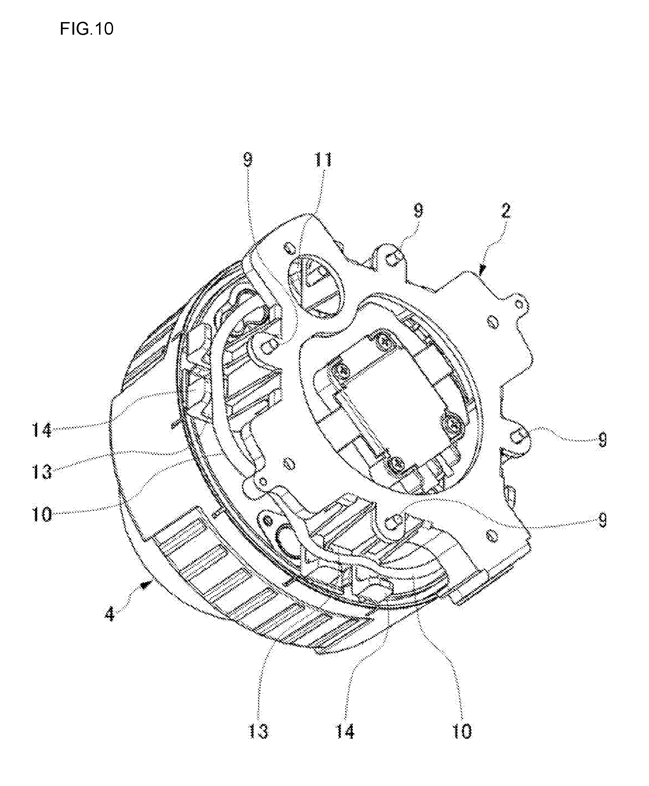

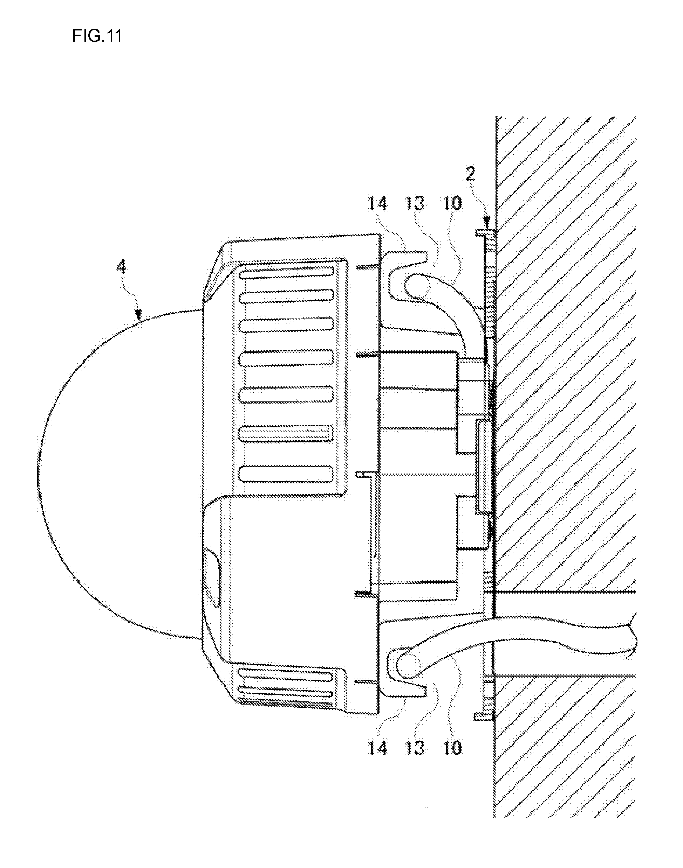

Subsequently, after fixing of the camera body 4 is completed as described above, the cable 10 connected to the camera body 4 and the cable 10 extending from the camera installing surface side are connected to each other (refer to Figure 9). In a case of the monitoring camera 1 installed outdoors, waterproofing (such as to wrap a waterproof tape) is provided when connecting the cable 10. The cable 10 connected as described above is hooked to the guide hooking portion 14 of the projecting portion 7 of the base member 2, and is stored in the storing space 13 of the base member 2 (refer to Figures 10 and 11).

Lastly, the cover member 5 is fitted in the outside of the storing space 13. In this case, the cover member 5 is screwed to the screw hole 12 of the base portion 6 of the base member 2 (refer to Figure 12). When the cover member 5 is attached as described above, the cable 10 stored in the storing space 13 is covered with the cover member 5 (refer to Figures 13 and 14). Note that at this time, the cover member 5 can also be said to be in a state of having moved to the cover position. In a manner described above, the installation work of the monitoring camera 1 is completed.

Next, a procedure when performing the maintenance work of the monitoring camera 1 will be described.

When performing the maintenance work of the monitoring camera 1, the screw of the cover member 5 is loosened, and the cover member 5 is removed. As a result, the cable 10 stored in the storing space 13 is exposed. At this time, the cover member 5 can also be said to be in a state of having moved to the exposure position. In this state, the maintenance work, such as confirmation of a connection state of the cable 10, is performed.

When the maintenance work is completed, the cover member 5 is fitted in the outside of the storing space 13, and is screwed to the screw hole 12 of the base portion 6 of the base member 2. Namely, the cover member 5 is moved from the exposure position to the cover position.
In a manner described above, the maintenance work is completed.

According to such monitoring camera 1 of the embodiment, the storing space 13 of the cable 10 is provided on an outer peripheral portion of the base member 2, and the cover member 5 slidable between the cover position and the exposure position is provided outside the storing space 13, whereby workability at the time of installation and maintenance of the monitoring camera can be improved.

Namely, in the embodiment, at the time of the installation work of the monitoring camera 1, first, the base member 2 is fixed to the camera installing surface, the attaching member 3 is fixed to the base member 2, and then the camera body 4 is fixed to the attaching member 3. Subsequently, the cable 10 is connected to the camera body 4 in a state where the camera body 4 is fixed, and the cable 10 is stored in the storing space 13 of the base member 2. As described above, since the connection work and the storage work of the cable 10 can be performed in a state where both hands can be used freely, workability at the time of installation of the monitoring camera 1 is improved compared with a case where only one hand can be used. Subsequently, lastly, the cover member 5 is attached to the base member 2, and then the cover member 5 is slid to the cover position. As described above, the cable 10 can be protected from outside by covering the cable 10 with the cover member 5. Meanwhile, at the time of the maintenance work of the monitoring camera 1, the cable 10 is exposed only by sliding the cover member 5 to the exposure position, and thus the maintenance work can be performed easily. As a result, workability at the time of maintenance of the monitoring camera 1 is improved.

In addition, in the embodiment, when performing the work to store the cable 10 in the storing space 13 of the base member 2, the cable 10 is hooked to the guide hooking portion 14 of the base member 2. The cable 10 hooked to the guide hooking portion 14 is held so as not to extend out of the storing space 13. As a result, when performing the installation work of the monitoring camera 1, the cable 10 is prevented from interfering with the work. Hence, workability at the time of installation of the monitoring camera 1 is further improved.

Although work procedures at the time of installation increase in the monitoring camera of the embodiment compared with the conventional monitoring camera, in a case of a monitoring camera installed at a high place, an effect that working hours are reduced due to the improved workability (the work can be performed with both hands) is larger compared with a disadvantage that the working hours become longer along with the increased work procedures. Namely, according to the monitoring camera of the embodiment, although the work procedures increase, working hours are reduced as a result.

As described above, although the embodiment of the present invention has been described by way of examples, the scope of the present invention is not limited to these, and can be changed/modified according to objects within the scope described in claims.

For example, although in the above description, the configuration has been exemplified in which the cover member 5 comes away from the base member 2 and the camera body 4 when moved to the exposure position, the scope of the present invention is not limited to this.

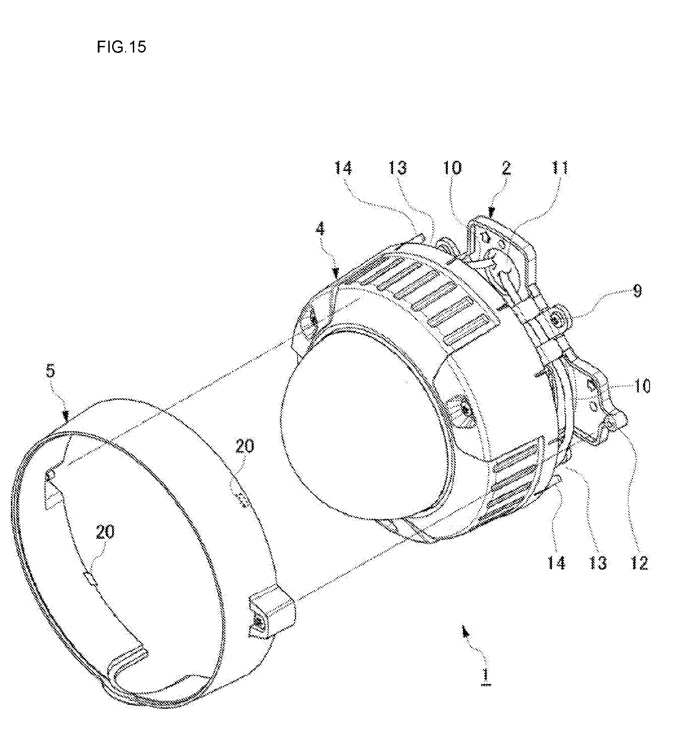

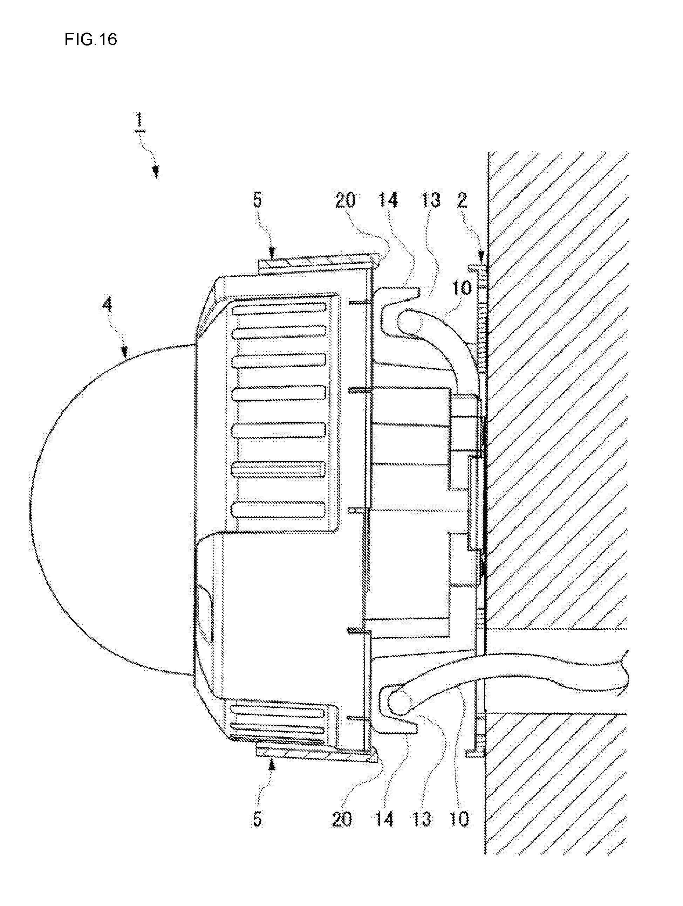

A modified example of the present invention will be shown in Figures 15 and 16. In this modified example, the monitoring camera 1 is configured such that when the cover member 5 is moved to the exposure position, it engages with the camera body 4. Specifically, as shown in Figure 15, two claw-like engaging latch portions 20 are provided on an inner peripheral surface of the cover member 5. Additionally, as shown in Figure 16, when the cover member 5 is moved to the exposure position, the engaging latch portions 20 are hooked to the camera body 4, and the cover member 5 is prevented from coming away from the camera body 4.

In such modified example, when the cover member 5 is moved to the exposure position at the time of the maintenance work of the monitoring camera 1, the engaging latch portions 20 of the cover member 5 engage with the camera body 4, and the cover member 5 is prevented from coming away during the work. Hence, the maintenance work can be performed in the state where both hands can be used freely, and workability at the time of maintenance of the monitoring camera 1 is further improved.

In addition, although not particularly shown here, the monitoring camera 1 may be configured such that when the cover member 5 is moved to the exposure position, it engages with the base member 2. In this case as well, an effect similar to the one in the above-described modified example can be obtained. Namely, when the cover member 5 is moved to the exposure position at the time of the maintenance work of the monitoring camera 1, the engaging latch portions 20 of the cover member 5 engage with the base member 2, and the cover member 5 is prevented from coming away during the work. Hence, the maintenance work can be performed in the state where both hands can be used freely, and workability at the time of maintenance of the monitoring camera 1 is further improved.

The preferred embodiments of the present invention that can be considered at present have been described above, and it is intended to be understood that various modifications can be performed with respect to the embodiments, and to include in the appended claims all the various modifications within the true spirit and the scope of the present invention.

### Industrial Applicability

As described above, the monitoring camera according to the present invention is useful since it has an effect that workability at the time of installation and maintenance thereof can be improved, and is used for a monitoring system of facilities and buildings, etc.

### Reference Signs List

- 1: Monitoring camera
- 2: Base member
- 3: Attaching member
- 4: Camera body
- 5: Cover member
- 6: Base portion
- 7: Projecting portion
- 10: Cable
- 11: Cable insertion hole
- 12: Screw hole
- 13: Storing space
- 14: Guide hooking portion
- 15: Screw hole
- 18: Attaching hole
- 19: Attaching screw
- 20: Engaging latch portion

## Claims

1. A monitoring camera comprising: a base member fixed to a camera installing surface; an attaching member fixed to the base member; and a camera body fixed to the attaching member, wherein
a storing space for storing a cable connected to the camera body is provided on an outer peripheral portion of the base member, and a cover member for covering the storing space is attached to an outside of the storing space, and
the cover member can be moved between a cover position where the cable stored in the storing space is covered and an exposure position where the cable stored in the storing space is exposed.

2. The monitoring camera according to claim 1, wherein the base member comprises a guide hooking portion for hooking the cable stored in the storing space.

3. The monitoring camera according to claim 1, wherein the cover member comprises an engaging latch portion that engages with the base member or the camera body when the cover member is moved to the exposure position.

4. A method for attaching a monitoring camera comprising:
fixing a base member to a camera installing surface;
fixing an attaching member to the base member;
fixing a camera body to the attaching member;
connecting a cable to the camera body;
storing the cable connected to the camera body in a storing space provided on an outer peripheral portion of the base member; and
attaching a cover member to an outside of the storing space to cover the cable stored in the storing space with the cover member.
